# EUROPEAN PATENT SPECIFICATION

(11) **EP 3 407 174 B1**
(45) Date of publication and mention of the grant of the patent: **13.12.2023**
(21) Application number: 16890205.4
(22) Date of filing: 19.02.2016
(51) Int. Cl.: G06F 3/0484, G06F 3/041, G06F 3/0481, G06F 3/0482, G06F 3/048, G06F 3/04817, G06F 3/04842

(54) **METHOD AND APPARATUS FOR OPERATING A PLURALITY OF OBJECTS ON PRESSURE TOUCH-CONTROL SCREEN**
VERFAHREN UND VORRICHTUNG ZUM BETREIBEN EINER MEHRZAHL VON OBJEKTEN AUF EINEM DRUCKBERÜHRUNGSBILDSCHIRM
PROCÉDÉ ET DISPOSITIF DE COMMANDE D'UNE PLURALITÉ D'OBJETS AFFICHÉS SUR UN ÉCRAN À COMMANDE TACTILE SENSIBLE À LA PRESSION

(43) Date of publication of application: 28.11.2018
(73) Proprietor: Huawei Technologies Co., Ltd., Longgang District Shenzhen, Guangdong 518129 (CN)
(72) Inventor: TAN, Binbin, Shenzhen Guangdong 518129 (CN)
(74) Representative: Pfenning, Meinig & Partner mbB
(86) International application number: PCT/CN2016/074139
(87) International publication number: WO 2017/139972

(56) References cited:
- CN-A- 103 513 882
- CN-A- 105 094 647
- US-A1- 2006 132 455
- US-A1- 2011 018 695
- US-A1- 2014 354 557
- US-A1- 2015 067 559

## Description

### TECHNICAL FIELD

Embodiments of the present invention relate to the field of electronic devices, and in particular, to a method for operating multiple objects on a pressure-sensitive touchscreen that is configured to detect pressure and location of a user touch input, an apparatus, a display system, and a computer-readable storage medium.

### BACKGROUND

With wider application of electronic devices having touch functions, especially with development of smartphones, functions of intelligent terminals become increasingly powerful. When using an intelligent terminal, a user usually installs multiple applications. Especially as a screen becomes larger, more applications or content can be simultaneously displayed. Therefore, rapidly selecting multiple applications or multiple pieces of content for management also becomes a common operation manner of the user. In an existing technical solution, a user needs to perform relatively complex operations to select multiple applications or multiple pieces of content, and applications or content cannot be rapidly selected and operated. With development of touchscreens and technologies, a solution to rapid selection of multiple applications or multiple pieces of content for an operation is required, to provide good user experience.
US 2011/018695 A1 discloses a method for displaying a view of an application on a touch-sensitive display including detecting a touch on the sensitive display, whereby a first function is performed based on a touch force larger than a first threshold and a second function is performed based on a touch force larger than a second threshold.
US 2014/354557 A1 discloses a method for on-screen displayed multiple objects comprising detecting whether a control signal appears via a control moving trace, determining which objects are located within an closed area defined by the trace, and operating these determined objects on a basis of an object type.
In US 2006/132455 A1 the use of pressure-sensitive selection tools in a graphical user interface is disclosed in which the amount of pressure during a selection operation may modify selection behavior. Upon receiving a selection input, the pressure applied is determined and the selection behavior modified. In some embodiments, the number of objects selected is increased when more pressure is applied and decreased when less pressure is applied.

### SUMMARY

According to the present invention, the above objects are solved by the claimed matter according to the independent claims. In view of this, embodiments of the present invention provide a method for operating multiple objects on a pressure-sensitive touchscreen, and an apparatus, and the multiple objects may include an application or content, so as to rapidly select multiple objects and select a to-be-performed operation, facilitate use of a user, and improve efficiency of the user.

According to an aspect, an embodiment of the present invention provides a method for operating multiple objects on a pressure-sensitive touchscreen that is configured to detect pressure and location of a user touch input, the method comprising: classifying the detected pressure into at least two pressure levels; displaying the multiple objects on the pressure-sensitive touch screen, wherein the multiple objects are grouped into different groups; and detecting pressure and location of a user touch input on the pressure-sensitive touchscreen. Further, the method comprises: selecting a first group of objects to be operated among the different groups of the multiple objects according to the detected pressure and the classified at least two pressure levels, determining a first operation among at least two different operations according to the detected location of the user touch input on the pressure-sensitive touchscreen, wherein a different operation of the at least two operations is selected by a touch input operation at a corresponding different particular location on the touch-sensitive touchscreen; and performing the determined first operation on the selected first group of objects.

It should be noted that the pressure-sensitive touchscreen and a display screen may be integrated or may be separately disposed. When the pressure-sensitive touchscreen and the display screen are separately disposed, an object is displayed on the display screen, and the pressure-sensitive touchscreen detects a user input.

In a possible implementation, an operation manner for a group of objects includes moving the group of objects, copying the group of objects, deleting the group of objects, classifying the group of objects, sorting the group of objects, or marking the group of objects in a visually identifiable manner, or the like. A user may simultaneously operate multiple objects in a group, thereby avoiding complex steps of operating the multiple objects one by one, and improving user experience.

Certainly, it may also be understood that there may be one or more operations on a group of objects. When multiple operations need to be performed, each subsequent operation may be determined according to a detected user input. For example, a group of objects are first marked, and then moved. This solution expands use manners of the user, and enables the user to instruct the electronic device to freely combine multiple operations, thereby improving efficiency of managing multiple objects.

In a possible implementation, operations on different groups of objects may be the same or may be different.

In a possible implementation, the multiple objects are grouped according to displayed locations. Grouping logic may be: grouping adjacent or nonadjacent objects satisfying a condition, for example, objects in a display area on the screen, or objects forming a particular pattern. In this case, the user can intuitively determine objects to be operated by the electronic device, and can easily manage the content. Moreover, the user may also arrange locations of the multiple objects in advance, to facilitate a subsequent operation.

In another possible implementation, the multiple objects are grouped according to types. The types may include game, information, social, music, control, text, image, animation, installation time, use frequency, and the like. Therefore, when operating objects, the electronic device may select different types of objects according to a requirement of the user, thereby enriching user experience.

In a possible implementation, logic of grouping objects may be predefined by the user, to facilitate the user to perform adjustment according to a personal habit, thereby improving ease of use and use efficiency.

In a possible implementation, a condition for determining a pressure level of a user input may be: being greater than or less than a threshold, or between two thresholds. Pressure applied by the user on the screen may be instantaneous pressure, or an average value in a period of time, or a preset time length maintained within a range. An existing use habit of the user can be developed or satisfied by setting a proper preset condition, thereby improving efficiency and ease of use.

According to this embodiment a to-be-operated object is determined according to a pressure level, so that the user selects different groups of objects for an operation by applying different pressure. In this case, the user selects different operations by applying pressure at different locations on the pressure-sensitive touchscreen. For example, when the multiple objects are grouped according to displayed locations, different pressure levels may correspond to objects within different display ranges. When the multiple objects are grouped according to types, different pressure levels may correspond to different types of objects. When applying different pressure, the user does not need to perform multiple actions. The user can rapidly select different groups of objects only by adjusting applied pressure at one location. Therefore, the manner of rapidly performing selection by means of pressure is easy to use, and has numerous application scenarios.

Different pressure levels respectively correspond to different groups of objects. A group of objects to be operated and an operation are determined according to a combination of a location at which the user applies pressure and a pressure level. For example, a pressure level 1 corresponds to an object group 1, and a pressure level 3 corresponds to an object group 3. When a pressure level corresponds to an object, a location at which the user applies pressure corresponds to an operation.

In an example useful for understanding the invention, a to-be-operated object is related to pressure applied by the user and duration of the pressure that are detected by the pressure-sensitive touchscreen. When the user applies pressure, the pressure-sensitive touchscreen sequentially feeds back groups of objects corresponding to different duration to the user. The feedback may be visual or non-visual. When the user gives a confirmation instruction, a group of objects that are currently fed back are operated. In this implementation, the user can intuitively observe the to-be-operated objects; and an operation is simple and convenient.

Further, in a possible implementation, a pressure level is determined according to a peak of pressure applied by the user. In this way, the user can conveniently and rapidly select, only by one tap, a group of objects corresponding to a pressure level for an operation.

Further, in another possible implementation, the pressure-sensitive touchscreen detects a change of pressure applied by the user, feeds back a to-be-operated object to the user according to pressure levels corresponding to different pressure, and operates, after detecting a confirmation instruction of the user, a group of objects that are currently fed back. The feedback may be visual or non-visual. For example, when the multiple objects are grouped according to displayed locations, the user may broaden or narrow down a selection range by increasing or decreasing pressure. When the multiple objects are grouped according to types, the user may choose to operate different types of objects by increasing or decreasing pressure. In this way, the user is provided with a chance to perform an adjustment. The user is allowed to locate a to-be-operated object more accurately, thereby avoiding repeated inputs performed after pressure applied once has no match.

Further, in a possible implementation, the pressure-sensitive touchscreen feeds back a to-be-operated object to the user according to pressure levels corresponding to different pressure applied by the user and a location of the pressure. When detecting that a change of pressure applied by the user has stayed at a pressure level for a preset time, the pressure-sensitive touchscreen considers that the user sends a confirmation instruction, and performs an operation according to a group of objects and an operation that correspond to a current pressure level and location. In this implementation, the user does not need to perform any extra action, and can operate the multiple objects only by stopping changing the pressure, so as to select a to-be-operated object with ease; and an operation is simple and convenient.

Alternatively, when detecting that a user input has stayed at a location for a preset time, the pressure-sensitive touchscreen may consider that the user sends a confirmation instruction.

Further, in another possible implementation, the pressure-sensitive touchscreen feeds back a to-be-operated object to the user according to pressure levels corresponding to different pressure applied by the user and a location of the pressure, when the user performs another action, considers that the user sends a confirmation instruction, and performs an operation according to a group of objects and an operation that correspond to location. In this implementation, the user does not need to perform an operation after waiting for a period of time. Instead, the user directly performs a confirmation action after selecting a group of objects and an operation that are desired, to instruct a system to start to perform an operation. Therefore, interaction experience is good.

In a possible implementation, a confirmation instruction may be sent by performing a sliding action while pressure is applied, or may be sent by means of another action, for example, performing another input (tapping or sliding) on the pressure-sensitive touchscreen, or may be sent in another interaction manner (a button, sound control, acceleration sensing, and the like) on the electronic device having the pressure-sensitive touchscreen. Certainly, it is easy to understand that a performed operation may also be moving an object. In this case, the user performs a sliding action to instruct the system to start to perform an operation and move a selected group of objects.

It should be noted that in a possible implementation of the present invention, a case in which there is only one object in a type, or one object is grouped into several groups may occur. This can provide more operation manners for the user, and the operation manners also fall within the protection scope of the present invention.

According to another aspect, an embodiment of the present invention provides a device. The device has the foregoing function of operating multiple objects on a pressure-sensitive touchscreen. The function may be implemented by hardware, or may be implemented by executing corresponding software by hardware. The hardware or software includes one or more modules corresponding to the foregoing function. The module may be hardware and/or software.

The device includes a pressure-sensitive touchscreen, a memory, and a processor. The pressure-sensitive touchscreen detects the foregoing information such as pressure, a location, or duration of a user input. The memory stores logic for grouping multiple objects and an operation. The processor reads a corresponding group and operation from the memory according to the information about the user input, to operate an object.

According to still another aspect, an embodiment of the present invention provides a display system as defined by appended claim 13.

The system has the foregoing function of operating multiple objects on a pressure-sensitive touchscreen. The function may be implemented by hardware, or may be implemented by executing corresponding software by hardware. The hardware or software includes one or more modules corresponding to the foregoing function. The module may be hardware and/or software.

The system includes a memory, a communications unit, a processor, and a display. The memory stores logic for grouping multiple objects and an operation. The communications unit is configured to obtain information, such as pressure, a location, or duration of a user input, detected by a pressure input apparatus. The processor reads corresponding logic and a corresponding operation from the memory according to the information about the user input, and sends, to the display, operation information of operating a group of objects.

According to still another aspect, an embodiment of the present invention provides a computer-readable storage medium, configured to store a computer software instruction for implementing the foregoing implementations.

By means of the foregoing solutions, multiple objects can be rapidly and conveniently selected and operated, thereby improving use efficiency of a user and providing good interaction experience.

### BRIEF DESCRIPTION OF DRAWINGS

FIG. 1 is a schematic diagram of a device according to a possible implementation of the present invention;
FIG. 2 is a schematic diagram of a display system according to a possible implementation of the present invention;
FIG. 3 is a schematic diagram of operating a group of objects according to a possible implementation of the present invention;
FIG. 4 is a schematic diagram of operating a group of objects according to another possible implementation of the present invention;
FIG. 5 is a schematic diagram of operating a group of objects according to still another possible implementation of the present invention;
FIG. 6 is a schematic diagram of operating a group of objects according to a non-claimed example useful for understanding the present invention;
FIG. 7 is a schematic diagram of grouping objects according to types according to a possible implementation of the present invention;
FIG. 8 is a schematic diagram of operating a group of objects in FIG. 7 according to a non-claimed example useful for understanding the present invention;
FIG. 9 is a schematic diagram of operating a group of objects in FIG. 7 according to a non-claimed example useful for understanding the present invention;
FIG. 10 is a schematic diagram of operating a group of objects according to a possible implementation of the present invention;
FIG. 11 is a schematic diagram of operating a group of objects according a non-claimed example useful for understanding the present invention;
FIG. 12 is a schematic diagram of operating different groups of objects on a pressure-sensitive touchscreen by using different levels of pressure according to the present invention:
FIG. 13 is a flowchart of an operation method according to a possible implementation of the present invention;
FIG. 14 is a flowchart of an operation method according to another possible implementation of the present invention;
FIG. 15 is a structural diagram of a device according to a possible implementation of the present invention;
FIG. 16 is a structural diagram of a system according to a possible implementation of the present invention; and
FIG. 17 is a module diagram of a system according to a possible implementation of the present invention.

### DESCRIPTION OF EMBODIMENTS

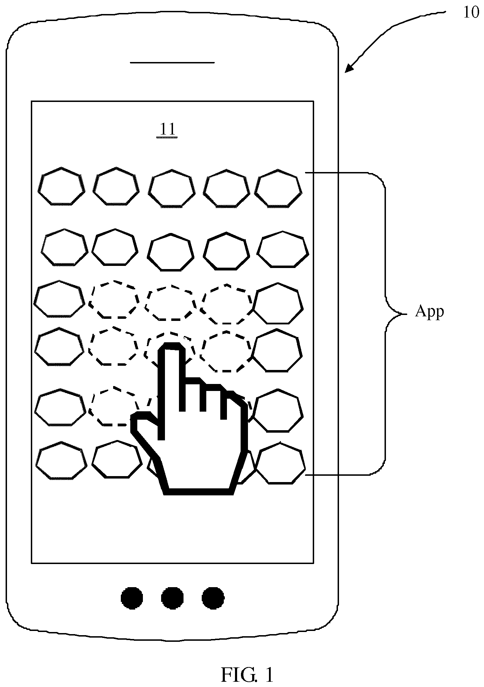

FIG. 1 is a schematic diagram of a device 10 according to a possible implementation of the present invention. As shown in the figure, the device 10 has a pressure-sensitive touchscreen 11. The pressure-sensitive touchscreen 11 displays multiple objects. An object is an icon App in this implementation. A user interacts with the pressure-sensitive touchscreen 11. The pressure-sensitive touchscreen detects information such as pressure at which the user touches, a location touched by the user, or duration for which the user has touched. The device 10 determines, according to the detected pressure and location, a to-be-operated object and an operation that are selected by the user. The user may select multiple icons Apps once for batch operations. These icons Apps have been grouped according to particular logic in advance. Therefore, the user can choose to perform different types of batch operations on different groups of application icons Apps by adjusting pressure and/or a location of a touch.

It is easy to understand that the device 10 includes, but is not limited to, a portable terminal such as a smartphone, a tablet computer, or a personal computer (including a desktop computer and a notebook computer), and also includes another electronic device having a pressure input function. All devices that can be used by a user to perform a grouping operation on multiple displayed icons Apps by means of pressure-sensitive touch shall fall within the present invention. An object may be displayed on the pressure-sensitive touchscreen 11, or may be displayed on a display screen disposed separately from the pressure-sensitive touchscreen 11.

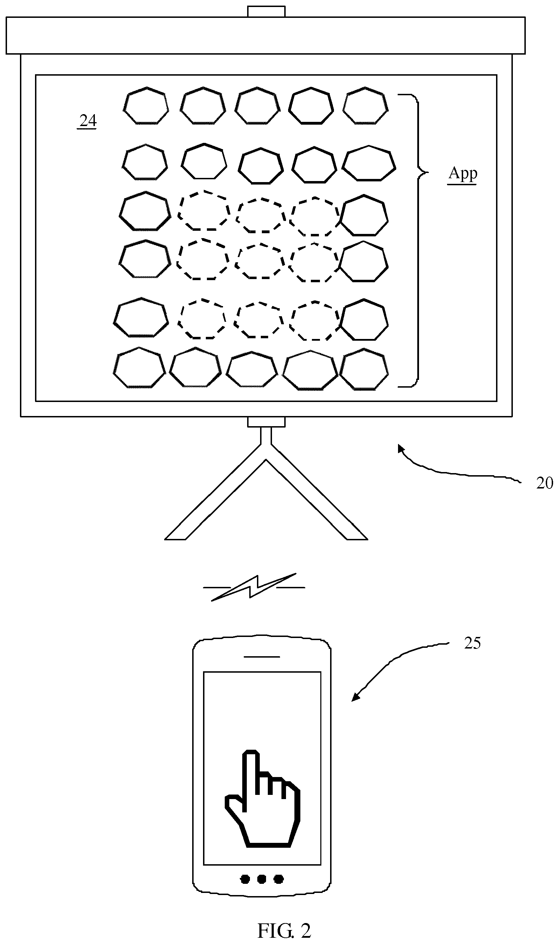

FIG. 2 is a schematic diagram of a display system 20 according to a possible implementation of the present invention. As shown in the figure, unlike the device 10 in FIG. 1, a display 24 included in the display system 20 displays multiple icons Apps. A user interacts with the display system 20 by using a pressure input apparatus 25. After detecting, by using the pressure input apparatus 25, information about pressure at which the user touches, a location touched by the user, and duration for which the user has touched, the display system 20 displays an operation result of icons Apps.

In a possible implementation, the display system 20 may be a home entertainment device such as a television, or may be a large display system used in a public place such as a theater or a stadium. The display system 20 implements different operations on multiple icons Apps according to the detected information about the pressure and the location.

The implementations performed by using the device 10 mentioned in this specification may also be performed by using the display system 20, provided that it is technically feasible. Details are not described again below.

In a possible implementation, preset logic may be preset by the user, or preset by a system. Objects include, but are not limited to, an application and content, for example, an application icon, an image, a text, a hyperlink, an animation, a control, a form, and a display unit in an application.

In a possible implementation, an operation manner for a group of objects may include selecting the group of objects, moving the group of objects, copying the group of objects, deleting the group of objects, classifying the group of objects, sorting the group of objects, or marking the group of objects in a visually identifiable manner, or the like. For example, in a desktop mode of a smartphone, highlighting or shaking application icons on a screen can implement a particular visual effect, to form a pattern; or multiple application icons are sorted or are added to a folder; or multiple objects in a shopping application are added to a shopping cart in batch; or batch commands are delivered to multiple combat units in a game application; or multiple historical chat records or SMS messages are arranged in a chat application; or multiple pictures in a gallery are classified. A person skilled in the art should understand that implementations of the present invention are limited to the examples mentioned above.

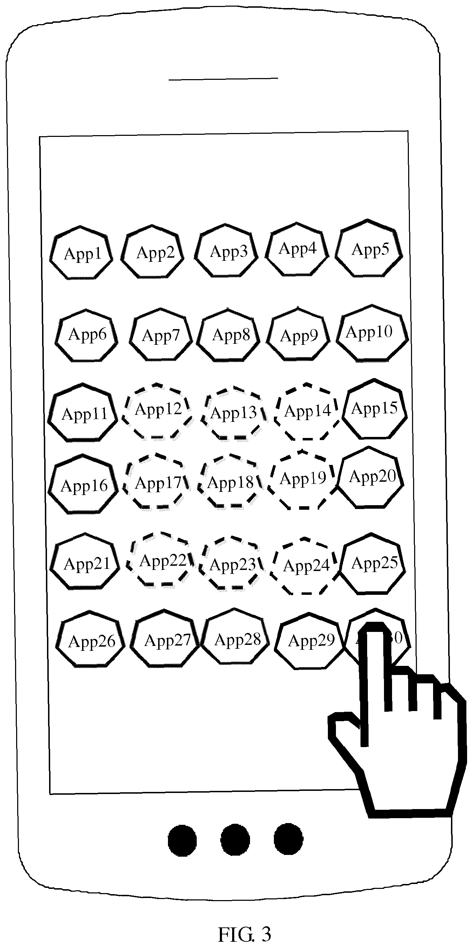

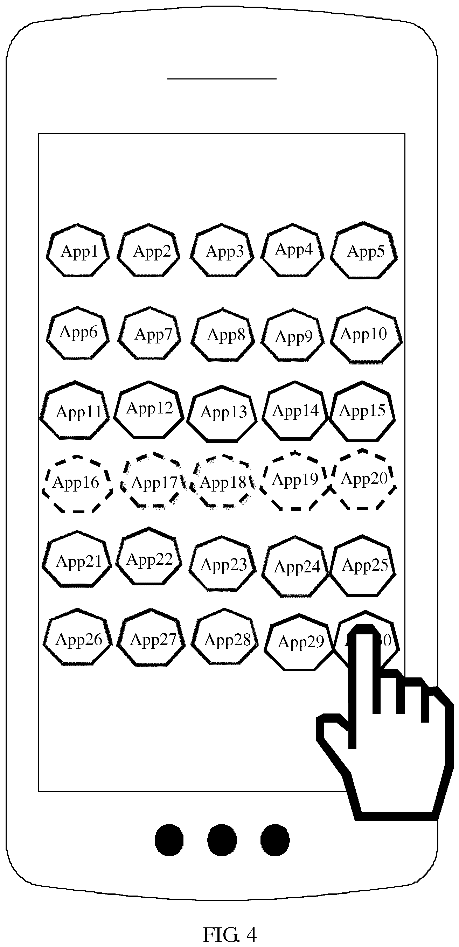

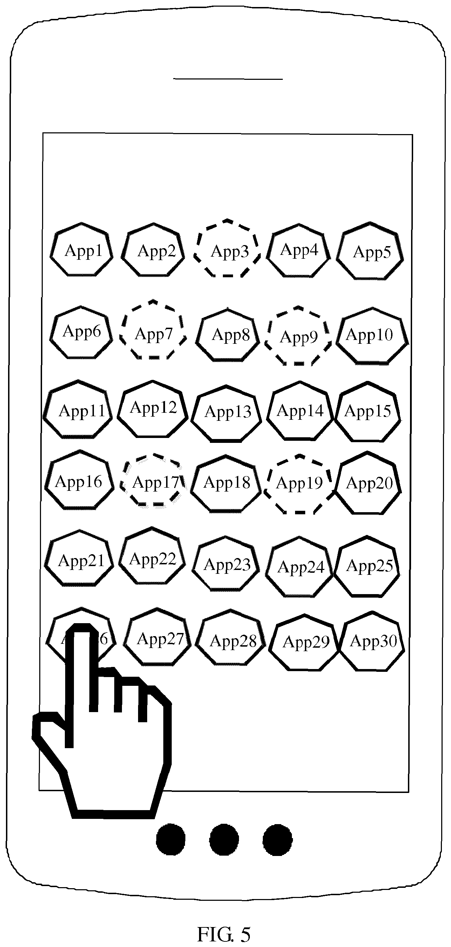

FIG. 3 to FIG. 5 are schematic diagrams of operating a group of objects according to several possible implementations of the present invention. In the implementations, object Apps 1 to 30 may be grouped according to displayed locations. A formed pattern may be a line, a square, a circle, a triangle, a rectangle, a circle, a user-defined polygon, an irregular closed area, discrete points, or the like. The device 10 uses different locations tapped by a user on the pressure-sensitive touchscreen 11 as inputs to determine an operation, and selects, by using detected pressure, one object or a group of objects to be operated. For example, when a pressure level of an input is 1, a normal operation is correspondingly performed on a single object; when a pressure level of an input is 2, a group of objects shown in FIG. 3 are correspondingly selected; when a pressure level of an input is 3, a group of objects shown in FIG. 4 are correspondingly selected; or when a pressure level of an input is 4, a group of objects shown in FIG. 5 are correspondingly selected. The device 10 selects an operation by detecting a particular location tapped by the user on the pressure-sensitive touchscreen 11, selects an object by detecting pressure applied by a hand of the user, and may perform a specified type of operation on one object or a group of objects satisfying a condition.

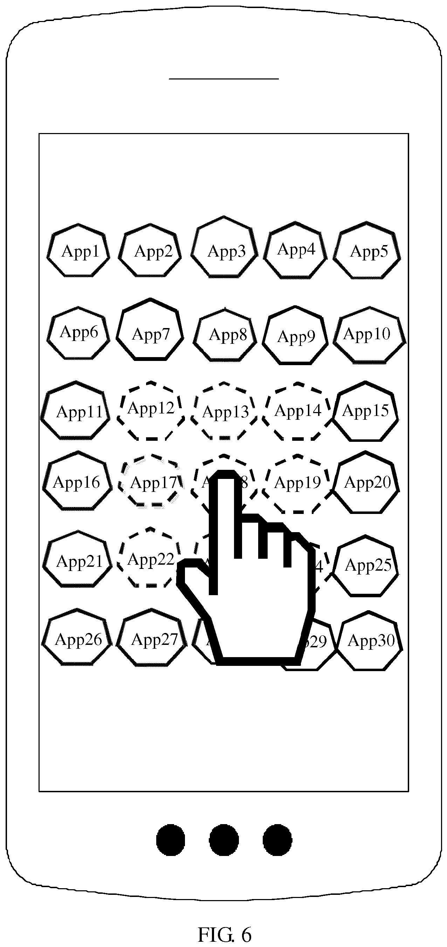

FIG. 6 is a schematic diagram of operating a group of objects according to an example useful for understanding the present invention. Unlike FIG. 3 to FIG. 5, the device 10 may determine, by detecting different locations tapped by the user on the pressure-sensitive touchscreen 11, one object or a group of objects to be operated, and may select an operation by using detected pressure. When the pressure-sensitive touchscreen 11 detects that the user taps an application App on the screen, the device 10 selects an application App in a square area centered around a tapped location, and selects an operation by detecting different pressure applied by the user. In this implementation, the user may adjust the tapped location, to instruct the device 10 to perform batch operations on different groups of objects.

It is easy to understand that in an example, the device 10 may select groups of objects forming different shapes by detecting different locations tapped by the user on the pressure-sensitive touchscreen 11, for example, select, by tapping a center of the screen, a group of objects forming a square, or select, by tapping an edge of the screen, a group of objects forming a line. The selected group of objects do not necessarily include an object at a location currently tapped by the user.

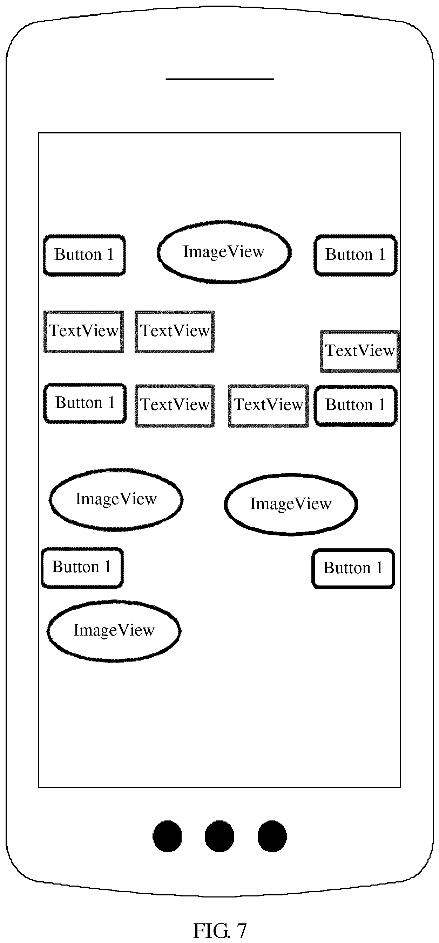

FIG. 7 is a schematic diagram of grouping objects according to types according to a possible implementation of the present invention. During grouping, the objects may be grouped according to types, for example, a music application such as iTunes, a map application such as Google Maps, a game application such as Angry Birds, a shopping application such as Amazon, and a social application such as Facebook; or may be grouped according to an attribute such as a text, an image or images of a same type (portrait, scenery, or nature), an installation time, or use frequency. In this implementation, the objects are classified into three types: buttons Button 1, texts TextViews, and images Image Views.

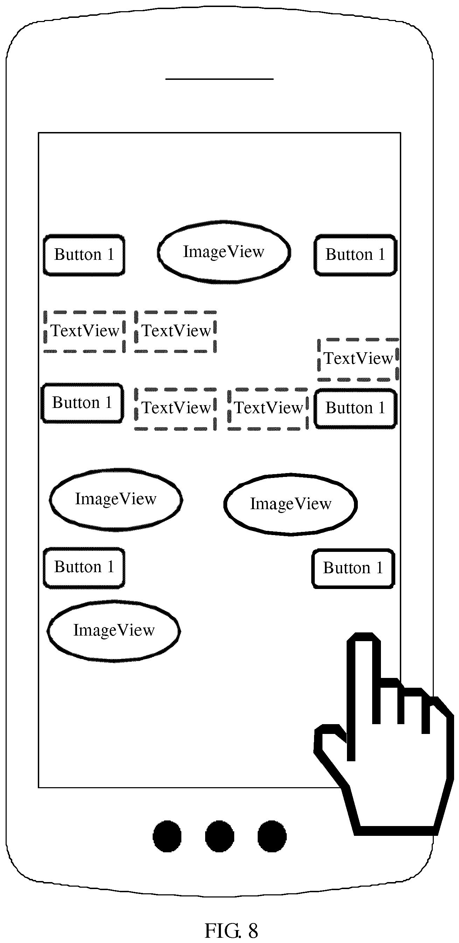

FIG. 8 is a schematic diagram of operating a group of objects in FIG. 7 according to a possible implementation of the present invention. A location of an input corresponds to an operation, and applied pressure corresponds to a to-be-operated object. The device 10 determines an operation by detecting a particular location tapped by the user on the pressure-sensitive touchscreen 11. In this implementation, an operation corresponding to tapping a right lower part of the pressure-sensitive touchscreen 11 is highlighting. The device 10 operates a group of objects by detecting a change of the pressure. For example, when pressure levels are 1, 2, and 3 respectively, the three types of objects: buttons Button 1, texts TextViews, and images Image Views shown in FIG. 7 are respectively operated. In this implementation, a group of objects corresponding to current pressure are texts TextViews.

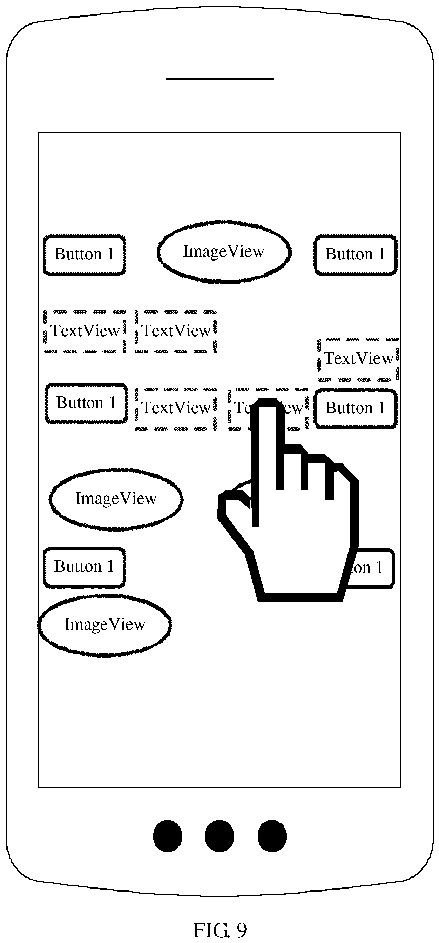

FIG. 9 is a schematic diagram of operating a group of objects in FIG. 7 according to an example useful for understanding the present invention. A location of an input corresponds to a to-be-operated object, and applied pressure corresponds to an operation. The device 10 may select different types of objects by detecting different locations tapped by the user on the pressure-sensitive touchscreen 11. As shown in the figure, if the user currently taps a text TextView, multiple texts TextViews of a same type are selected. If the user taps an image Image View, multiple images Image Views of a same type are selected. Then, the device 10 may select different operations by detecting different pressure applied by the user.

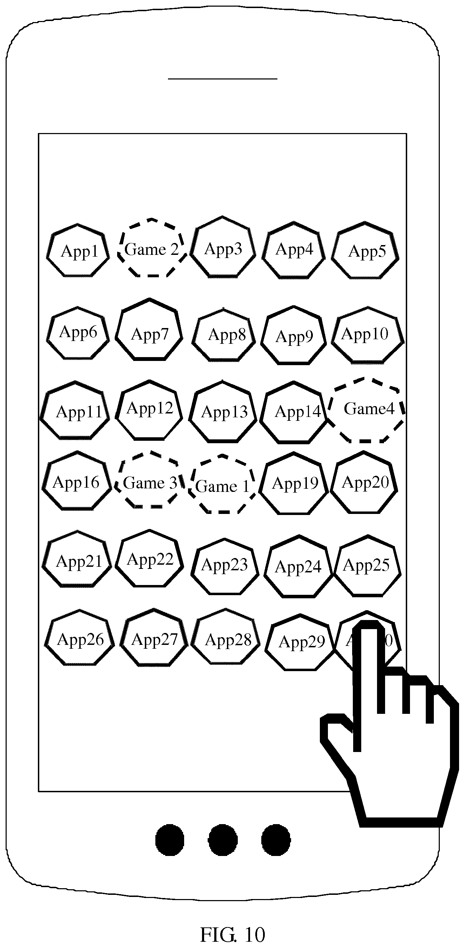

FIG. 10 is a schematic diagram of operating a group of objects according to a possible implementation of the present invention. Objects are grouped according to types. A location of an input corresponds to an operation, and applied pressure corresponds to a to-be-operated object. The device 10 selects an operation by detecting a particular location tapped by the user on the pressure-sensitive touchscreen 11, and selects game applications Game 1, Game 2, Game 3, and Game 4 according to current pressure.

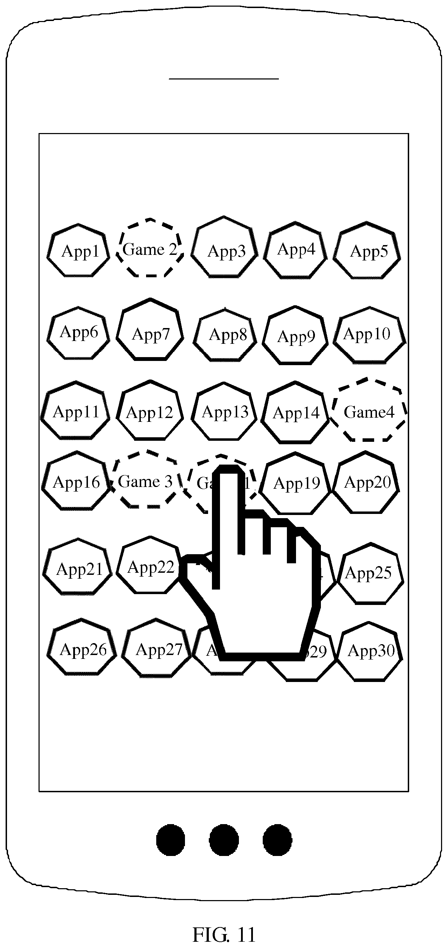

FIG. 11 is a schematic diagram of operating a group of objects according to an example useful for understanding the present invention. Unlike FIG. 10, a location of an input corresponds to a to-be-operated object, and applied pressure corresponds to an operation. When detecting that the user taps a game application Game 1, the pressure-sensitive touchscreen 11 selects multiple applications Game 2, Game 3, and Game 4 that belong to a same game type. Then, the device 10 selects different operations by detecting, by using the pressure-sensitive touchscreen 11, different pressure applied by the user.

It is easy to understand that alternatively, in the foregoing implementations of grouping objects by using displayed locations or types, different groups of objects may be selected or operated by detecting duration of a user input. For example, when the pressure-sensitive touchscreen 11 is long pressed for 0.5 second, a group of objects are selected, and when the pressure-sensitive touchscreen 11 is long pressed for 1 second, another group of objects are selected; or when the pressure-sensitive touchscreen 11 is long pressed for 0.5 second, an operation is performed, and when the pressure-sensitive touchscreen 11 is long pressed for 1 second, another operation is performed.

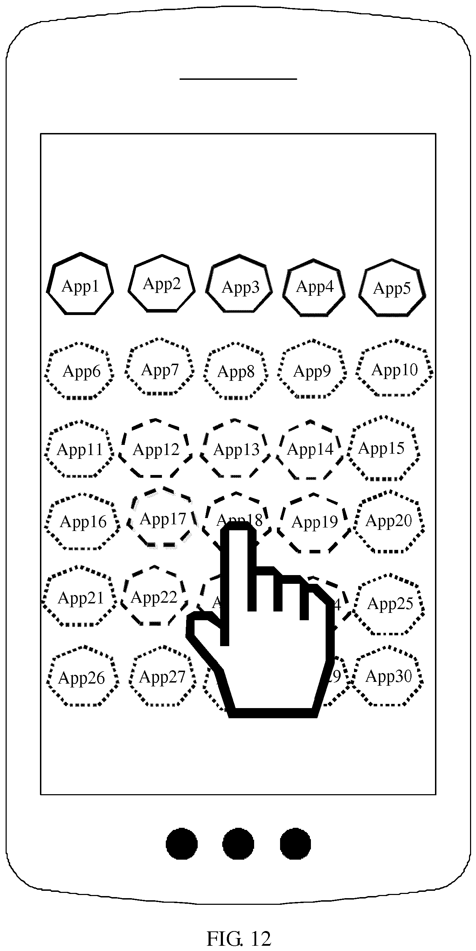

FIG. 12 is a schematic diagram of operating different groups of objects on a pressure-sensitive touchscreen by using different levels of pressure according to a possible implementation of the present invention.

Pressure is classified into two or more levels, for example, three levels: light pressing, normal pressing, and heavy pressing. 0 to 255 levels or a higher level is defined at a bottom layer according to a capability of a hardware device. When the user applies pressure, the hardware device directly reports a value ranging from 0 to 255. An upper-layer application defines, according to the capability of the hardware device and according to a design, a pressure level for pressure obtained by the hardware device, and may define that pressure values 0 to 84 are a pressure level 1, 85 to 169 are a pressure level 2, 170 to 255 are a pressure level 3, and the like.

As shown in FIG. 12, the pressure-sensitive touchscreen 11 detects that the user taps a location of an application App 18 to select an operation, and detects that the user maintains a pressing state. When it is determined that the pressure level is 1, a selected range fed back to the user is the single application App 18; when it is determined that the pressure level is 2, a selected range fed back to the user is 3×3=9 applications centered around the application App 18; or when it is determined that the pressure level is 3, a selected range fed back to the user is 5×5=25 applications centered around the application App 18. When the pressure-sensitive touchscreen 11 detects that the user performs an adjustment among the pressure levels 1 to 3 when the user maintains a pressing state, the pressure-sensitive touchscreen 11 correspondingly displays a broadened range or a narrowed-down selected range.

In this implementation, because the user is provided with a chance to perform a selection and an adjustment, errors of user operations can be reduced, and burden of the user is reduced. Moreover, more pressure levels may be classified into, to implement a finer adjustment.

Pressure applied by the user on the pressure-sensitive touchscreen 11 corresponds to a group of objects to-be-operated. The pressure-sensitive touchscreen 11 detects the pressure applied by the user. When it is determined that a level of the pressure applied by the user is 1, the device 10 normally operates a single object at a tapped location, for example, opens a single application, or selects a single piece of content. When it is determined that a level of the pressure applied by the user is 2, as shown in FIG. 3 to FIG. 5, a group of objects displayed at preset locations are selected. When it is determined that a level of the pressure applied by the user is 3, as shown in FIG. 8 or FIG. 10, a group of objects of a preset type (for example, a text TextView or a game application Game) are selected.

In an example which is referred to as background for understanding the invention, a location of a user input on the pressure-sensitive touchscreen 11 is associated with a group of objects to be operated. The device 10 selects a to-be-operated object by detecting a location of a user input, and selects a to-be-performed operation by detecting a level of applied pressure. For example, in FIG. 9, if a location of a user input is a text TextView, the device 10 selects multiple texts TextViews of a same type for an operation. When a level of pressure applied by the user is 1, the texts TextViews are deleted. When a level of pressure applied by the user is 2, the texts TextViews are sorted. When a level of pressure applied by the user 3, the texts TextViews are copied. In this implementation, the user can obtain more operation choices, thereby rapidly and conveniently performing different operations on multiple objects.

Table 1 is a non-claimed first example for the foregoing possible implementation which is referred to as background for understanding the invention and in which a to-be-operated object and an operation are determined according to a tapped location and a pressure level. A group of objects to be operated are determined according to a type of an object at a tapped location, and a type of an operation is determined according to a pressure level.

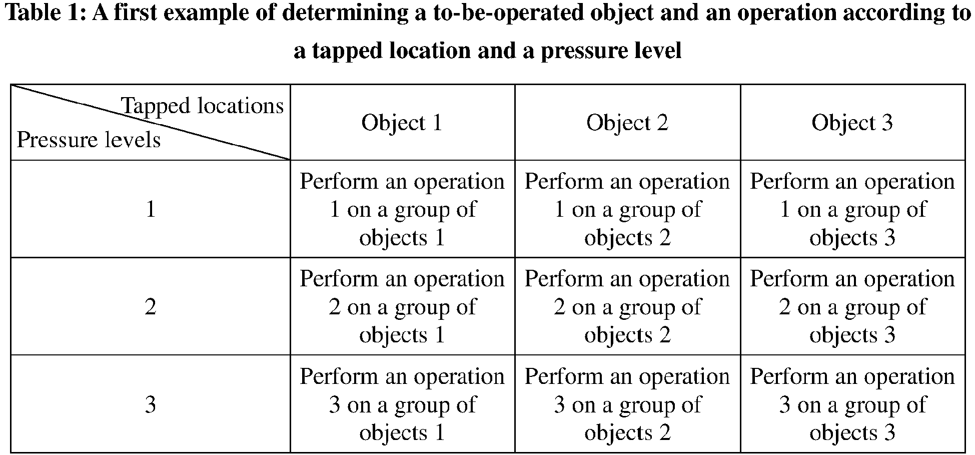

Table 2 is a non-claimed second example for the foregoing possible implementation which is referred to as background for understanding the invention and in which a to-be-operated object and an operation are determined according to a tapped location and a pressure level. A group of objects to be operated are determined according to a location tapped on the pressure-sensitive touchscreen, and a type of an operation is determined according to a pressure level.

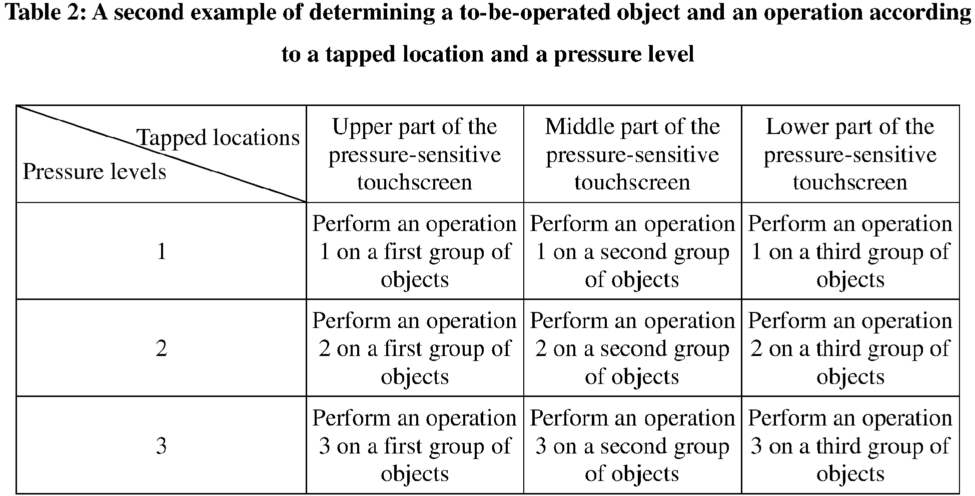

According to the embodiments of the invention, a to-be-operated object is selected by using a level of applied pressure, and a to-be-performed operation is selected by using a location of an input.

Table 3 is an example for the embodiments of the invention in which a to-be-operated object and an operation are determined according to a tapped location and a pressure level. A group of objects to be operated are determined according to a pressure level, and a type of an operation is determined according to a location tapped on the pressure-sensitive touchscreen.

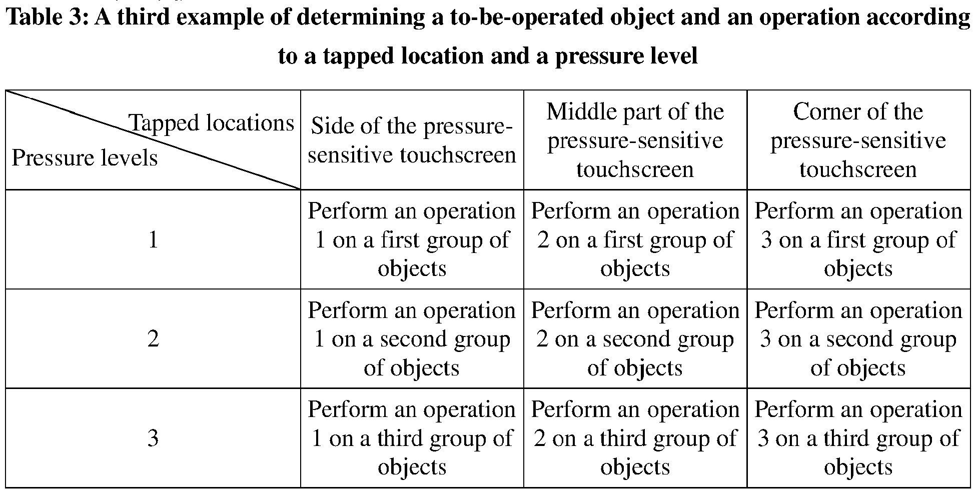

In another example useful for understanding the invention, a pressure level and a location of an input are not in a one-to-one correspondence to a to-be-operated object and an operation, which can be freely combined instead.

Table 4 is a non-claimed example for the foregoing possible implementation which is referred to as background for understanding the invention and in which a to-be-operated object and an operation are determined according to a tapped location and a pressure level. Different pressure levels respectively correspond to groups of objects to be operated or correspond to operations. A group of objects to be operated and an operation are determined according to a combination of a location tapped on the pressure-sensitive touchscreen and a pressure level. That is, when a pressure level corresponds to a group of objects to be operated, a location tapped on the pressure-sensitive touchscreen corresponds to an operation. When a pressure level corresponds to an operation, a location tapped on the pressure-sensitive touchscreen corresponds to a group of objects to be operated.

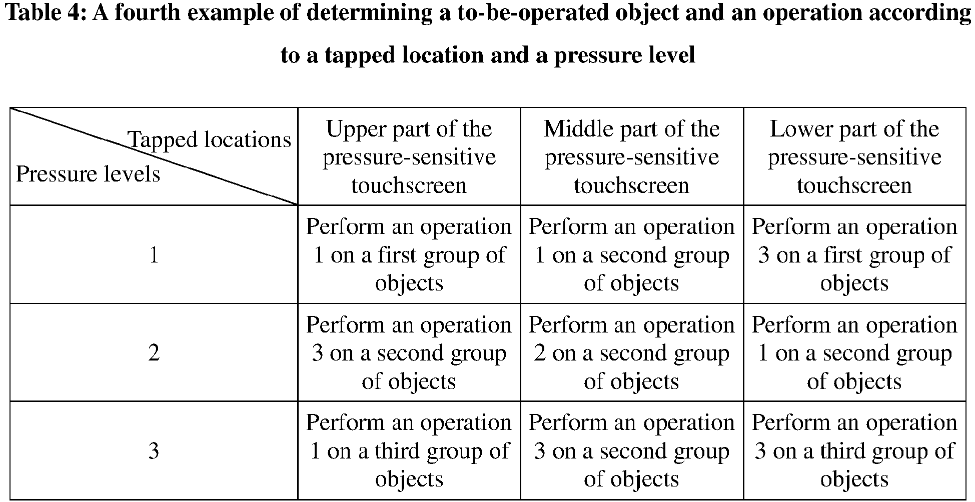

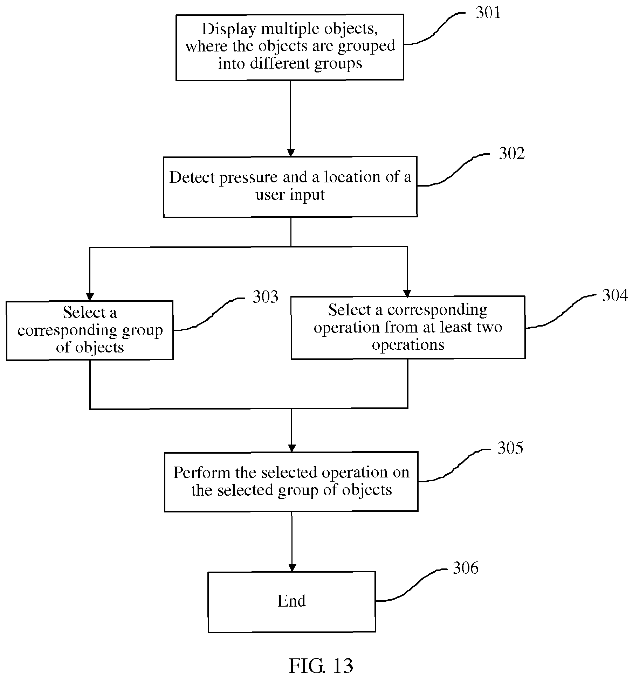

FIG. 13 is a flowchart of an operation method according to a possible implementation of the present invention. As shown in the figure:
In step 301, a pressure-sensitive touchscreen displays multiple objects, where the objects are grouped into different groups according to preset logic.
In step 302, the pressure-sensitive touchscreen detects a user input. The user input is a combination of pressure and a location, and may furthmore contain duration, and a gesture.
In step 303, a group of objects to be operated are selected.
In step 304, a to-be-performed operation is selected from at least two operations.
In step 305, the selected operation is performed on the selected group of objects.
In step 306, the procedure ends.

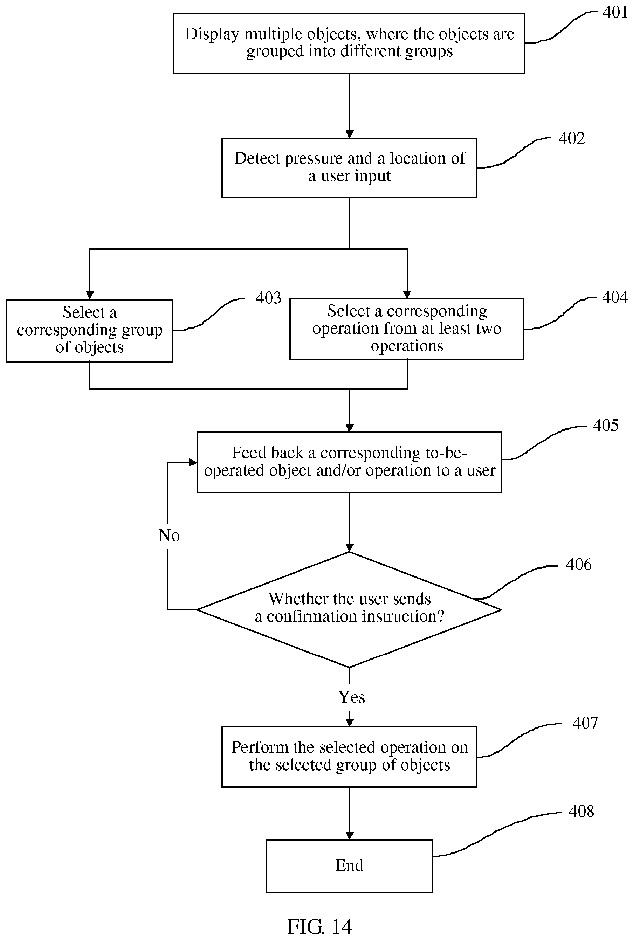

FIG. 14 is a flowchart of an operation method according to another possible implementation of the present invention. As shown in the figure:
In step 401, a pressure-sensitive touchscreen displays multiple objects, where the objects are grouped into different groups according to preset logic.
In step 402, the pressure-sensitive touchscreen detects pressure and a location of a user input.
In step 403, a group of objects to be operated are selected.
In step 404, a to-be-performed operation is selected from at least two operations.
In step 405, the pressure-sensitive touchscreen feeds back the to-be-operated objects and/or the operation to a user.

The to-be-operated objects and/or the operation may be fed back to the user in a visual manner or a non-visual manner. For example, to-be-operated objects are indicated to the user by highlighting or shaking an application icon or content, and a type of a current operation is indicated to the user by displaying a menu, or a current pressure level or a to-be-operated object is indicated to the user by using sound, or a to-be-performed operation is notified to the user by using sound, or a current pressure level or operation is indicated to the user by means of strength or a time change of a vibration feedback, so that the user may determine a group of objects to be operated and an operation to be performed.

Further, when it is detected that the pressure level and/or the location of the user input is changed, a to-be-operated object and/or an operation after the change is fed back to the user, so that the user may choose to perform different operations on different groups of objects according to the changed pressure level and/or the changed location.

In step 406, whether the user sends a confirmation instruction is detected; and if the user sends a confirmation instruction, step 407 is performed; or if the user does not send a confirmation instruction, step 405 is performed.

When a confirmation instruction is detected, it is determined that the user wants to operate the group of objects that are currently fed back. In this case, the pressure-sensitive touchscreen no longer waits for a pressure change adjusted by the user. If no confirmation instruction is received, the pressure-sensitive touchscreen continues detecting pressure and/a location of a user input, and feeds back, to the user, a group of objects and/or an operation corresponding to a current pressure level and location.

In a possible implementation, a confirmation instruction may be sent by staying at a pressure level for a specified time. For example, when detecting that pressure applied by the user has stayed at a pressure level for 0.5 second, the pressure-sensitive touchscreen determines that the user sends a confirmation instruction.

In another possible implementation, a confirmation instruction may be sent by entering new information on the pressure-sensitive touchscreen. For example, the user first presses the pressure-sensitive touchscreen, and performs sliding on the pressure-sensitive touchscreen after adjusting the pressure and the location and selecting a group of objects to be operated or an operation. After detecting a sliding action of the user, the pressure-sensitive touchscreen determines that the user sends a confirmation instruction.

It is easy to understand that in an alternative implementation, the user may send a confirmation instruction by performing a particular gesture by performing sliding; or enter a confirmation instruction by extra tapping the pressure-sensitive touchscreen instead of performing sliding.

In still another possible implementation, the user may enter a confirmation instruction in another interaction manner instead of using the pressure-sensitive touchscreen, for example, by tapping a key on a device having the pressure-sensitive touchscreen, or by delivering a voice instruction, or by using an infrared sensor, or by capturing an action by using a camera, or by enabling a smartphone to be in a particular posture by using a posture sensor such as a gyroscope. When detecting an input performed by the user in these interaction manners, the device determines whether the user sends a confirmation instruction.

In step 407, the selected operation is performed on the selected group of objects.

In step 408, the procedure ends.

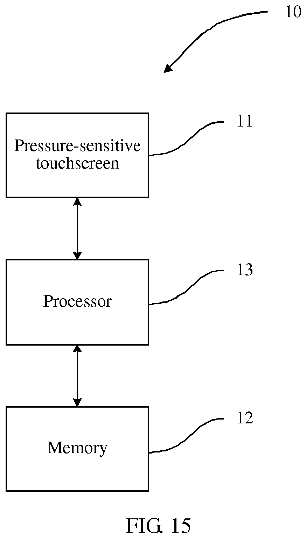

FIG. 15 is a structural diagram of a device according to a possible implementation of the present invention. As shown in the figure, the device 10 includes a pressure-sensitive touchscreen 11, a memory 12, and a processor 13. The pressure-sensitive touchscreen 11 displays multiple objects, and is configured to detect related information such as pressure, a location, or duration of a user input. The memory 12 is configured to store preset logic for grouping the multiple objects into different groups and an operation. The processor 13 reads the logic and the operation, compares with the information about the user input, and performs a corresponding operation on the objects.

In a possible implementation, the pressure-sensitive touchscreen 11 may directly obtain through detection a value of the pressure applied by a user, or approximately determine a value of the applied pressure by detecting a contact area between a finger and the pressure-sensitive touchscreen when the user performs an input.

In a possible implementation, the memory 12 may be a short-term or long-term storage medium such as a disk, a flash memory, a CD, or a buffer.

In a possible implementation, the logic may be implemented by executing a program or an instruction by the processor 13, or may be implemented by hardware.

In a possible implementation, the processor 13 and the memory 12 may be disposed on a single chip to perform implementation, or may be disposed on different chips to perform implementation.

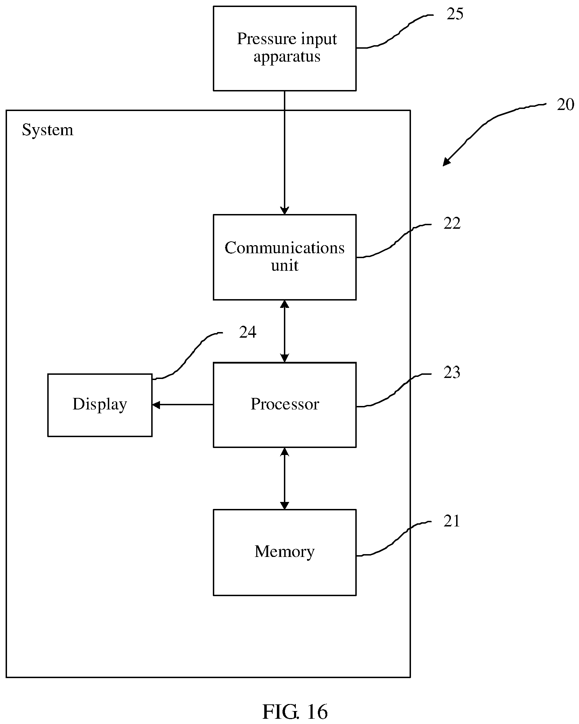

FIG. 16 is a structural diagram of a system according to a possible implementation of the present invention. As shown in the figure, the system 20 includes: a memory 21, a communications unit 22, a processor 23, and a display 24. Unlike the device 10 in FIG. 15, the processor 23 is configured to: obtain information about a user input from a pressure input apparatus 25 by using the communications unit 22, and send operation information for the object to the display 24.

It is easy to understand that the pressure input apparatus 25 and the communications unit 22 may be connected in a wired or wireless manner, or may be connected in any other manner that can be used for signal transfer.

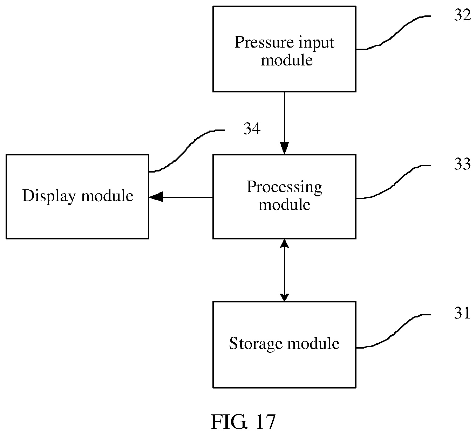

FIG. 17 is a module diagram of a system according to a possible implementation of the present invention. As shown in the figure, a display module 34 displays multiple objects. The objects are grouped in advance according to logic. The logic for grouping and at least two operations are stored in a storage module 31. A pressure input module 32 sends information about pressure and a location of a user input to a processing module 33. The processing module 33 reads a group of objects to be operated and an operation from the storage module 31.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. A method for operating multiple objects on a pressure-sensitive touchscreen that is configured to detect pressure and location of a user touch input, the method comprising:
classifying the detected pressure into at least two pressure levels;
displaying (301, 401) the multiple objects on the pressure-sensitive touch screen, wherein the multiple objects are grouped into different groups; and
detecting (302, 402) pressure and location of a user touch input on the pressure-sensitive touchscreen;
**characterized in that** the method comprises:
selecting (303, 403) a first group of objects to be operated among the different groups of the multiple objects according to the detected pressure and the classified at least two pressure levels,
determining (304, 404) a first operation among at least two different operations according to the detected location of the user touch input on the pressure-sensitive touchscreen, wherein a different operation of the at least two operations is selected by a touch input operation at a corresponding different particular location on the touch-sensitive touchscreen; and
performing (305, 407) the determined first operation on the selected first group of objects.

2. The method according to claim 1, wherein the multiple objects are grouped according to displayed locations.

3. The method according to claim 1, wherein the multiple objects are grouped according to types.

4. The method according to claim 1, further comprising: feeding (405) back an indication about the selected first group of objects to be operated and/or the determined first operation to the user.

5. The method according to claim 4, further comprising: detecting (406) confirmation of the user for the selected first group of objects and/or the determined first operation.

6. The method according to claim 5, further comprising: when the pressure and/or the location of the user touch input is changed, feeding back to the user an indication about a selection of a second group of objects to be operated and/or a determined second operation based respectively on the changed pressure and/or location of the user touch input, and detecting confirmation of the user for the selected second group of objects and/or the determined second operation.

7. An apparatus (10), comprising:
a pressure-sensitive touchscreen (11), configured to display multiple objects, and detect pressure and a location of a user touch input, wherein the pressure is classified into at least two pressure levels;
a memory (12) configured to store logic for grouping the multiple objects into different groups and at least two different operations, wherein a different operation of the at least two operations is configured to be selected by a touch input operation at a corresponding different particular location on the touch-sensitive touchscreen; and
a processor (13) configured to read the pressure and the location of the user touch input from the pressure-sensitive touchscreen (11) and read the logic and the at least two operations from the memory (12),
**characterized in that**,
the processor (13) is configured to select the first group of objects to be operated among the different groups of the multiple objects according to the read pressure and the classified at least two pressure levels,
determine a first operation from the at least two operations according to the read location of the user touch input, and
perform the determined first operation on the selected first group of objects.

8. The apparatus (10) according to claim 7, wherein the pressure-sensitive touchscreen (11) is configured to feed back an indication about the selected first group of objects to be operated and/or the determined first operation to the user.

9. The apparatus (10) according to claim 8, wherein the pressure-sensitive touchscreen (11) is configured to detect confirmation of the user for the selected first group of objects and/or the determined first operation.

10. The apparatus (10) according to claim 9, wherein when the pressure and/or the location of the user touch input is changed, the pressure-sensitive touchscreen (11) is configured to feed back to the user an indication about a selection of a second group of objects to be operated and/or a determined second operation to the user based respectively on the changed pressure and/or location of the user touch input, and to detect confirmation of the user for the selected second group of objects and/or the determined second operation.

11. The apparatus (10) according to claim 7, wherein the multiple objects are grouped according to displayed locations.

12. The apparatus (10) according to claim 7, wherein the multiple objects are grouped according to types.

13. A display system (20), comprising:
a display (24) configured to display multiple objects;
a communications unit (22) configured to obtain from a pressure input apparatus (25) pressure and a location information of a user touch input that is detected by the pressure input apparatus (25), wherein the pressure is classified into at least two pressure levels;
a memory (21) configured to store logic for grouping the multiple objects into different groups and at least two different operations, wherein a different operation of the at least two operations is selected by a touch input operation at a corresponding different particular location on the pressure input apparatus (25); and
a processor (23) configured to read the pressure and the location of the user input from the communications unit (22) and read the logic and the operations from the memory (21),
**characterized in that**
the processor (13) is configured to select the first group of objects to be operated among the different groups of the multiple objects according to the read pressure and the classified at least two pressure levels, to determine a first operation from the at least two operations according to the read location of the user touch input, and to perform the determined first operation on the selected first group of objects.

14. A computer-readable storage medium comprising instructions which, when executed by a computer, cause the computer to carry out the method according to any of claims 1 to 6.

## Patentansprüche

1. Verfahren zum Betreiben mehrerer Objekte auf einem druckempfindlichen Touchscreen, der konfiguriert ist, um einen Druck und eine Position einer Benutzerberührungseingabe zu erfassen, wobei das Verfahren Folgendes umfasst:
Klassifizieren des erfassten Drucks in mindestens zwei Druckpegel;
Anzeigen (301, 401) der mehreren Objekte auf dem druckempfindlichen Touchscreen, wobei die mehreren Objekte in unterschiedliche Gruppen gruppiert sind; und
Erfassen (302, 402) des Drucks und der Position einer Benutzerberührungseingabe auf dem druckempfindlichen Touchscreen;
**dadurch gekennzeichnet, dass** das Verfahren Folgendes umfasst:
Auswählen (303, 403) einer ersten Gruppe von Objekten, die unter den unterschiedlichen Gruppen der mehreren Objekte gemäß dem erfassten Druck und den klassifizierten mindestens zwei Druckpegeln betrieben werden sollen,
Bestimmen (304, 404) eines ersten Betriebs zwischen mindestens zwei unterschiedlichen Betrieben gemäß der erfassten Position der Benutzerberührungseingabe auf dem druckempfindlichen Touchscreen, wobei ein Betrieb, der sich von den mindestens zwei Betrieben unterscheidet, durch einen Berührungseingabebetrieb an einer entsprechenden unterschiedlichen festgelegten Position auf dem berührungsempfindlichen Touchscreen ausgewählt wird; und
Durchführen (305, 407) des bestimmten ersten Betriebs auf der ausgewählten ersten Gruppe von Objekten.

2. Verfahren nach Anspruch 1, wobei die mehreren Objekte gemäß den angezeigten Positionen gruppiert sind.

3. Verfahren nach Anspruch 1, wobei die mehreren Objekte nach Arten gruppiert werden.

4. Verfahren nach Anspruch 1, das ferner Folgendes umfasst: Rückmelden (405) einer Angabe über die ausgewählte erste Gruppe von zu betreibenden Objekten und/oder den bestimmten ersten Betrieb an den Benutzer.

5. Verfahren nach Anspruch 4, das ferner Folgendes umfasst: Erfassen (406) einer Bestätigung des Benutzers für die ausgewählte erste Gruppe von Objekten und/oder den bestimmten ersten Betrieb.

6. Verfahren nach Anspruch 5, das ferner Folgendes umfasst: wenn der Druck und/oder die Position der Benutzerberührungseingabe geändert wird, Rückmelden an den Benutzer einer Angabe über eine Auswahl einer zweiten Gruppe von zu bedienenden Objekten und/oder einen bestimmten zweiten Betrieb basierend jeweils auf dem geänderten Druck und/oder der Position der Benutzerberührungseingabe und Erfassen der Bestätigung des Benutzers für die ausgewählte zweite Gruppe von Objekten und/oder den bestimmten zweiten Betrieb.

7. Einrichtung (10), die Folgendes umfasst:
einen druckempfindlichen Touchscreen (11), der konfiguriert ist, um mehrere Objekte anzuzeigen und den Druck und eine Position einer Benutzerberührungseingabe zu erfassen, wobei der Druck in mindestens zwei Druckpegel klassifiziert wird;
einen Speicher (12), der konfiguriert ist, um Logik zum Gruppieren der mehreren Objekte in unterschiedliche Gruppen und mindestens zwei unterschiedliche Betriebe zu speichern, wobei ein Betrieb, der sich von den mindestens zwei Betrieben unterscheidet, konfiguriert ist, um durch einen Berührungseingabebetrieb an einer entsprechenden unterschiedlichen festgelegten Position auf dem berührungsempfindlichen Touchscreen ausgewählt zu werden; und
einen Prozessor (13), der konfiguriert ist, um den Druck und die Position der Benutzerberührungseingabe von dem druckempfindlichen Touchscreen (11) zu lesen und die Logik und die mindestens zwei Betriebe aus dem Speicher (12) zu lesen,
**dadurch gekennzeichnet, dass**
der Prozessor (13) konfiguriert ist, um die erste Gruppe von Objekten, die unter den unterschiedlichen Gruppen der mehreren Objekte gemäß dem Lesedruck und den klassifizierten mindestens zwei Druckpegeln betrieben werden sollen, auszuwählen, Bestimmen eines ersten Betriebs aus den mindestens zwei Betrieben gemäß der Leseposition der Benutzerberührungseingabe, und
Durchführen des bestimmten ersten Betriebs auf der ausgewählten ersten Gruppe von Objekten.

8. Einrichtung (10) nach Anspruch 7, wobei der druckempfindliche Touchscreen (11) konfiguriert ist, um eine Angabe über die ausgewählte erste Gruppe von zu betreibenden Objekten und/oder den bestimmten ersten Betrieb an den Benutzer rückzumelden.

9. Einrichtung (10) nach Anspruch 8, wobei der druckempfindliche Touchscreen (11) konfiguriert ist, um die Bestätigung des Benutzers für die ausgewählte erste Gruppe von Objekten und/oder den bestimmten ersten Betrieb zu erfassen.

10. Einrichtung (10) nach Anspruch 9, wobei, wenn der Druck und/oder die Position der Benutzerberührungseingabe geändert wird, der druckempfindliche Touchscreen (11) konfiguriert ist, um dem Benutzer eine Angabe über eine Auswahl einer zweiten Gruppe von zu bedienenden Objekten und/oder einen bestimmten zweiten Betrieb an den Benutzer basierend jeweils auf dem geänderten Druck und/oder der Position der Benutzerberührungseingabe rückzumelden und die Bestätigung des Benutzers für die ausgewählte zweite Gruppe von Objekten und/oder den bestimmten zweiten Betrieb zu erfassen.

11. Einrichtung (10) nach Anspruch 7, wobei die mehreren Objekte gemäß den angezeigten Positionen gruppiert sind.

12. Einrichtung (10) nach Anspruch 7, wobei die mehreren Objekte nach Arten gruppiert werden.

13. Anzeigesystem (20), das Folgendes umfasst:
eine Anzeige (24), die konfiguriert ist, um mehrere Objekte anzuzeigen;
eine Kommunikationseinheit (22), die konfiguriert ist, um durch eine Druckeingangseinrichtung (25) und Positionsinformationen einer Benutzerberührungseingabe, die durch die Druckeingangseinrichtung (25) erfasst wird, zu erhalten, wobei der Druck in mindestens zwei Druckpegel klassifiziert wird;
einen Speicher (21), der konfiguriert ist, um Logik zum Gruppieren der mehreren Objekte in unterschiedliche Gruppen und mindestens zwei unterschiedliche Betriebe zu speichern, wobei ein Betrieb, der sich von den mindestens zwei Betrieben unterscheidet, durch einen Berührungseingabebetrieb an einer entsprechenden unterschiedlichen festgelegten Position auf der Druckeingabeeinrichtung (25) ausgewählt wird; und
einen Prozessor (23), der konfiguriert ist, um den Druck und die Position der Benutzereingabe von der Kommunikationseinheit (22) zu lesen und die Logik und die Betriebe aus dem Speicher (21) zu lesen,
**dadurch gekennzeichnet, dass**
der Prozessor (13) konfiguriert ist, um die erste Gruppe von Objekten auszuwählen, die unter den unterschiedlichen Gruppen der mehreren Objekte gemäß dem Lesedruck und den klassifizierten mindestens zwei Druckpegeln betrieben werden sollen, um einen ersten Betrieb aus den mindestens zwei Betrieben gemäß der Leseposition der Benutzerberührungseingabe zu bestimmen und um den bestimmten ersten Betrieb auf der ausgewählten ersten Gruppe von Objekten durchzuführen.

14. Computerlesbares Speicherungsmedium, das Anweisungen umfasst, die, wenn sie durch einen Computer ausgeführt werden, den Computer veranlassen, das Verfahren nach einem der Ansprüche 1 bis 6 auszuüben.

## Revendications

1. Procédé de fonctionnement de multiples objets sur un écran tactile sensible à la pression qui est configuré pour détecter une pression et un emplacement d'une entrée tactile d'utilisateur, le procédé comprenant :
la classification de la pression détectée en au moins deux niveaux de pression ;
l'affichage (301, 401) des multiples objets sur l'écran tactile sensible à la pression,
dans lequel les multiples objets sont regroupés en différents groupes ; et
la détection (302, 402) d'une pression et d'un emplacement d'une entrée tactile d'utilisateur sur l'écran tactile sensible à la pression ;
**caractérisé en ce que** le procédé comprend :
la sélection (303, 403) d'un premier groupe d'objets à faire fonctionner parmi les différents groupes des multiples objets selon la pression détectée et les au moins deux niveaux de pression classés,
la détermination (304, 404) d'une première opération parmi au moins deux opérations différentes selon l'emplacement détecté de l'entrée tactile d'utilisateur sur l'écran tactile sensible à la pression, dans lequel une opération différente des au moins deux opérations est sélectionnée par une opération d'entrée tactile à un emplacement particulier différent correspondant sur l'écran tactile sensible à la pression ; et
le fait d'effectuer (305, 407) la première opération déterminée sur le premier groupe d'objets sélectionné.

2. Procédé selon la revendication 1, dans lequel les multiples objets sont regroupés selon des emplacements affichés.

3. Procédé selon la revendication 1, dans lequel les multiples objets sont regroupés selon des types.

4. Procédé selon la revendication 1, comprenant en outre : le renvoi (405) d'une indication concernant le premier groupe d'objets sélectionné à faire fonctionner et/ou la première opération déterminée à l'utilisateur.

5. Procédé selon la revendication 4, comprenant en outre : la détection (406) de confirmation de l'utilisateur pour le premier groupe d'objets sélectionné et/ou la première opération déterminée.

6. Procédé selon la revendication 5, comprenant en outre : lorsque la pression et/ou l'emplacement de l'entrée tactile d'utilisateur est modifié, le renvoi à l'utilisateur d'une indication concernant une sélection d'un second groupe d'objets à faire fonctionner et/ou d'une seconde opération déterminée, sur la base respectivement de la pression et/ou de l'emplacement modifié de l'entrée tactile d'utilisateur, et la détection de confirmation de l'utilisateur pour le second groupe d'objets sélectionné et/ou la seconde opération déterminée.

7. Appareil (10), comprenant :
un écran tactile sensible à la pression (11), configuré pour afficher de multiples objets, et détecter une pression et un emplacement d'une entrée tactile d'utilisateur, dans lequel la pression est classée en au moins deux niveaux de pression ;
une mémoire (12) configurée pour stocker une logique afin de regrouper les multiples objets en différents groupes et au moins deux opérations différentes, dans lequel une opération différente des au moins deux opérations est configurée pour être sélectionnée par une opération d'entrée tactile à un emplacement particulier différent correspondant sur l'écran tactile sensible à la pression ; et
un processeur (13) configuré pour lire la pression et l'emplacement de l'entrée tactile d'utilisateur à partir de l'écran tactile sensible à la pression (11) et lire la logique et les au moins deux opérations à partir de la mémoire (12),
**caractérisé en ce que,**
le processeur (13) est configuré pour sélectionner le premier groupe d'objets à faire fonctionner parmi les différents groupes des multiples objets selon la pression lue et les au moins deux niveaux de pression classés,
déterminer une première opération à partir des au moins deux opérations selon l'emplacement lu de l'entrée tactile d'utilisateur ; et
effectuer la première opération déterminée sur le premier groupe d'objets sélectionné.

8. Appareil (10) selon la revendication 7, dans lequel l'écran tactile sensible à la pression (11) est configuré pour renvoyer une indication concernant le premier groupe d'objets sélectionné à faire fonctionner et/ou la première opération déterminée à l'utilisateur.

9. Appareil (10) selon la revendication 8, dans lequel l'écran tactile sensible à la pression (11) est configuré pour détecter une confirmation de l'utilisateur pour le premier groupe d'objets sélectionné et/ou la première opération déterminée.

10. Appareil (10) selon la revendication 9, dans lequel, lorsque la pression et/ou l'emplacement de l'entrée tactile d'utilisateur sont modifiés, l'écran tactile sensible à la pression (11) est configuré pour renvoyer à l'utilisateur une indication concernant une sélection d'un second groupe d'objets à faire fonctionner et/ou une seconde opération déterminée à l'utilisateur sur la base respectivement de la pression et/ou de l'emplacement modifié de l'entrée tactile d'utilisateur, et pour détecter une confirmation de l'utilisateur pour le second groupe d'objets sélectionné et/ou la seconde opération déterminée.

11. Appareil (10) selon la revendication 7, dans lequel les multiples objets sont regroupés selon des emplacements affichés.

12. Appareil (10) selon la revendication 7, dans lequel les multiples objets sont regroupés selon des types.

13. Système d'affichage (20), comprenant :
un dispositif d'affichage (24) configuré pour afficher des multiples objets ;
une unité de communication (22) configurée pour obtenir à partir d'un appareil d'entrée de pression (25) une pression et une information d'emplacement d'une entrée tactile d'utilisateur qui est détectée par l'appareil d'entrée de pression (25), dans lequel la pression est classée en au moins deux niveaux de pression ;
une mémoire (21) configurée pour stocker une logique pour regrouper les multiples objets en différents groupes et au moins deux opérations différentes, dans lequel une opération différente des au moins deux opérations est sélectionnée par une opération d'entrée tactile à un emplacement particulier différent correspondant sur l'appareil d'entrée de pression (25) ; et
un processeur (23) configuré pour lire la pression et l'emplacement de l'entrée d'utilisateur à partir de l'unité de communication (22) et lire la logique et les opérations à partir de la mémoire (21),
**caractérisé en ce que**
le processeur (13) est configuré pour sélectionner le premier groupe d'objets à faire fonctionner parmi les différents groupes des multiples objets selon la pression lue et
les au moins deux niveaux de pression classés, pour déterminer une première opération à partir des au moins deux opérations selon l'emplacement lu de l'entrée tactile d'utilisateur, et pour effectuer la première opération déterminée sur le premier groupe d'objets sélectionné.

14. Support de stockage lisible par ordinateur comprenant des instructions qui, lorsqu'elles sont exécutées par un ordinateur, amènent l'ordinateur à réaliser le procédé selon l'une quelconque des revendications 1 à 6.
